## Europäisches Patentamt
## European Patent Office
## Office européen des brevets

(19)

(11) Publication number: **0 132 485**
**A1**

(12) # EUROPEAN PATENT APPLICATION

(21) Application number: **83850198.9**

(22) Date of filing: **21.07.83**

(51) Int. Cl.⁴: **C 23 C 18/00**
**B 29 C 45/00**

(43) Date of publication of application:
**13.02.85 Bulletin 85/7**

(84) Designated Contracting States:
**AT BE CH DE FR GB IT LI LU NL SE**

(71) Applicant: **CELLULOID I GISLAVED AB**
**P.O. Box 503**
**S-332 00 Gislaved(SE)**

(72) Inventor: **Torgilsman, Bertil**
**Österlidsgatan 7**
**S-332 00 Gislaved(SE)**

(74) Representative: **Franzén, Lars Hjalmar et al,**
**AWAPATENT AB Box 5117**
**S-200 71 Malmö(SE)**

(54) **A method of producing chromium-plated plastics materials or plastics details, and an apparatus for carrying the method into effect.**

(57) The present invention relates to a method of producing plastics products having partially metallized surfaces. To this end, use is made of two different types of plastics materials (1 and 2) which are formed into plastics elements (36) which are then immersed into a bath and provided with a surface layer of metal (61), for example by electroplating. By using a first plastics material (1) which attracts metal in the coating technique employed. and a second plastics material (2) which repels metal, there is obtained a partially metallized plastics product since only those portions of the plastics elements (36) which consist of the said first plastics material (1), will be provided with a surface layer of metal (61). The invention also relates to an apparatus for producing the plastics elements (36), said apparatus comprising an injection moulding machine which is so arranged that the plastics elements (36) consisting of different plastics materials (1 and 2) can be finished in this injection moulding machine.

FIG.2

# A METHOD OF PRODUCING CHROMIUM-PLATED PLASTICS MATERIALS OR PLASTICS DETAILS, AND AN APPARATUS FOR CARRYING THE METHOD INTO EFFECT

The present invention relates to a method of producing elements of plastics material, said elements having both metallized and nonmetallized portions, the metallized portions being formed by coating, for example electrolytic coating, immersion or some other per se known coating method.

There is a need for a production technique by which partially metallized plastics materials or plastics details can be manufactured by less complicated methods and, of course, at lower cost than is now the case.

It is becoming increasingly common to provide plastics details with a surface coating of metal, so-called chromium-plating of plastics to produce so-called chromium-plated plastics. One of the problems encountered in the production of such plastics products as are to be metallized and, furthermore, shall have nonmetallized portions, lies in the complicated production technique and in the large number of machines and the proportionately extensive manual operations that are required so that the finished product becomes unnecessarily expensive. A further price-raising fact is that the consumption of material will be considerable or considerably higher than for the production of a corresponding product whose surface is completely coated with a metal layer.

In the production of plastics products having a partially metallized surface, there has been manufactured on the one hand, and from a plastics material of a different colour, a component which constitutes the actual product and, on the other hand, a metallized plastic casing in which perforations, openings or holes are provided into or through which the product can extend. On assembly of these components, a product has been obtained which visually has appeared as a partially metallized product.

The keys of a keyboard, for example, are frequently provided with symbols, references, letters, digits and the like. These symbols etc. can be accomplished by making them in a colour different from that of the actual key or the shell, and then supplying them to the key. If the key is to be metallized, i.e. if it is to have a metallic surface, and if it is a key or control button for, for example, the chassis of television receivers or radios, for which products metallized keys are in increasing demand, one must resort to the above described technique of applying a metallized casing to the key in order to obtain a plastics key which has a metallic surface and carries a symbol or the like formed by the production of the key.

The method according to the present invention makes it possible to produce a partially metallized product in a far simpler manner than before and, furthermore, at a cost which is essentially the same as, or even lower than, the cost of fully metallized products. Compared with existing methods, or the known method previously described, of making partially metallized products, the products made by the method according to the present invention can be obtained at far lower cost, int.al. because of a simpler production technique, fewer machine units, the elimination of subsequent assembly, less consumption of material, better coordination of the production steps etc. The method according to the invention is characterized in that the element which is to be produced, is formed of at least two different plastics materials, i.e. at least a first plastics material and a second plastics material, the first plastics material being a plastics material which, during the said coating operation, attracts metal, while the second plastics material is a plastics material which repels metal, whereupon the element thus produced is subjected to metallization, for instance by immersion in a bath in which said first plastics material is provided with a surface layer of metal, while the said second plastics material remains without a metal coating.

Metal coatings can be produced by plating, immersion, spraying, electrolysis, diffusion and ion exchange. One method of producing a metal coating on plastics material is by electrolysation or electroplating, which makes it possible to effect a controlled variation of the thickness of the coating. The coating metal is obtained by electrolysis from a solution of a salt of the metal in a so-called bath solution. The elements to be metal-plated are immersed into the bath as the cathode. The plastics material must be provided with an electrode,dor the elements must be mounted on a device which is a cathode. The metal is conducted by the electric current to the elements and is deposited thereon in the form of a casing. Electric nickel-plating, electric chromium-plating and electric brass-plating are well known methods, the latter being an electrolytic alloy with, for example, copper. For the metallization of plastics materials, use is made of, for example, copper, nickel and chromium separately or together and, for example, in superimposed layers.

The invention also comprises an apparatus for carrying the method into effect, said apparatus being of the type which is arranged for injection moulding of elements by using a mould which is secured to the platen of the apparatus and which has a mould part movable in relation to the remaining mould parts of the mould, the mould being divided into mould cavity sections for the stepwise construction of an element, such as a plastics detail or a set of details, and intended to form, for example, keys with signs, symbols, figures and the like for the keyboards of, for example, telephones, calculating machines etc., press or control buttons for the chassis of, for example, television receivers and radios etc. Furthermore, the apparatus is provided with injection units. The apparatus according to the invention is characterized in that there

is provided a first injection unit for a first plastics material, the mould having a first mould cavity section, and a second injection unit for a second plastics material, the mould having a second mould cavity section, and that the first plastics material is intended to be injected into the first mould cavity section, while the second plastics material is intended to be injected into the second mould cavity section, that the movable mould part of the mould is arranged displaceably and rotatably in relation to the remaining mould parts of the mould for moving, after each injection through the said first and second injection units and after ejection of a finished element by means of, for example, an ejection mechanism, the element which is being built up within the mould to the next section of the mould.

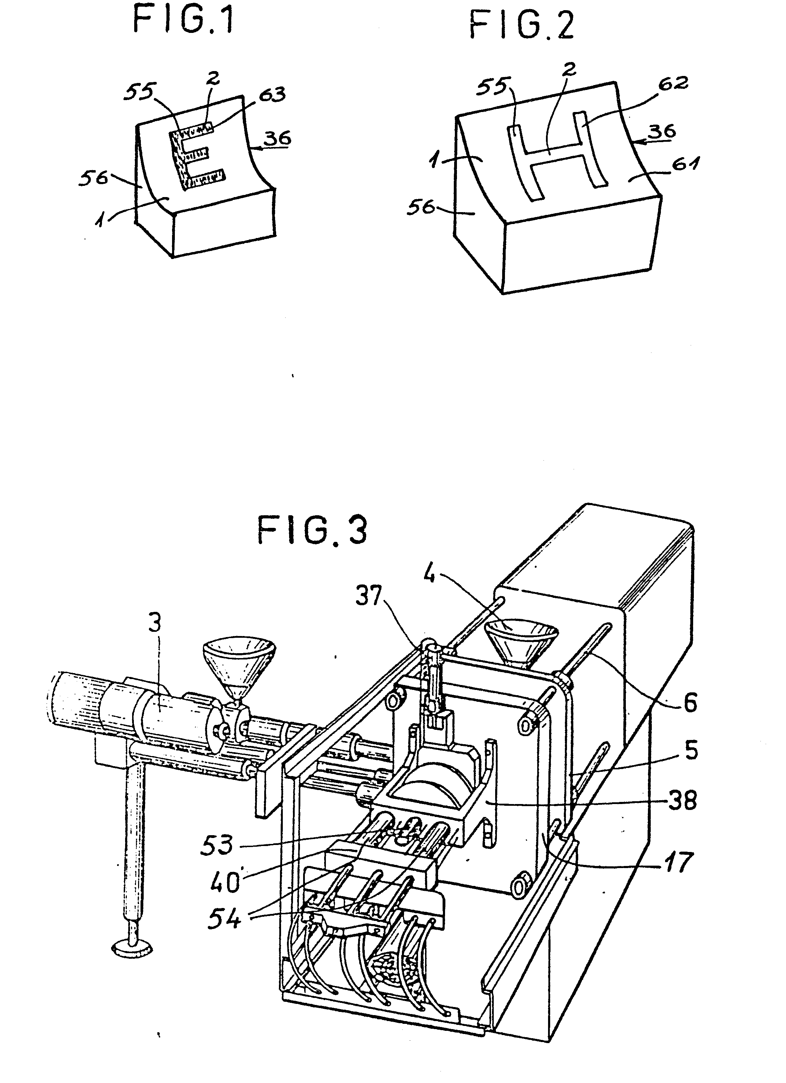

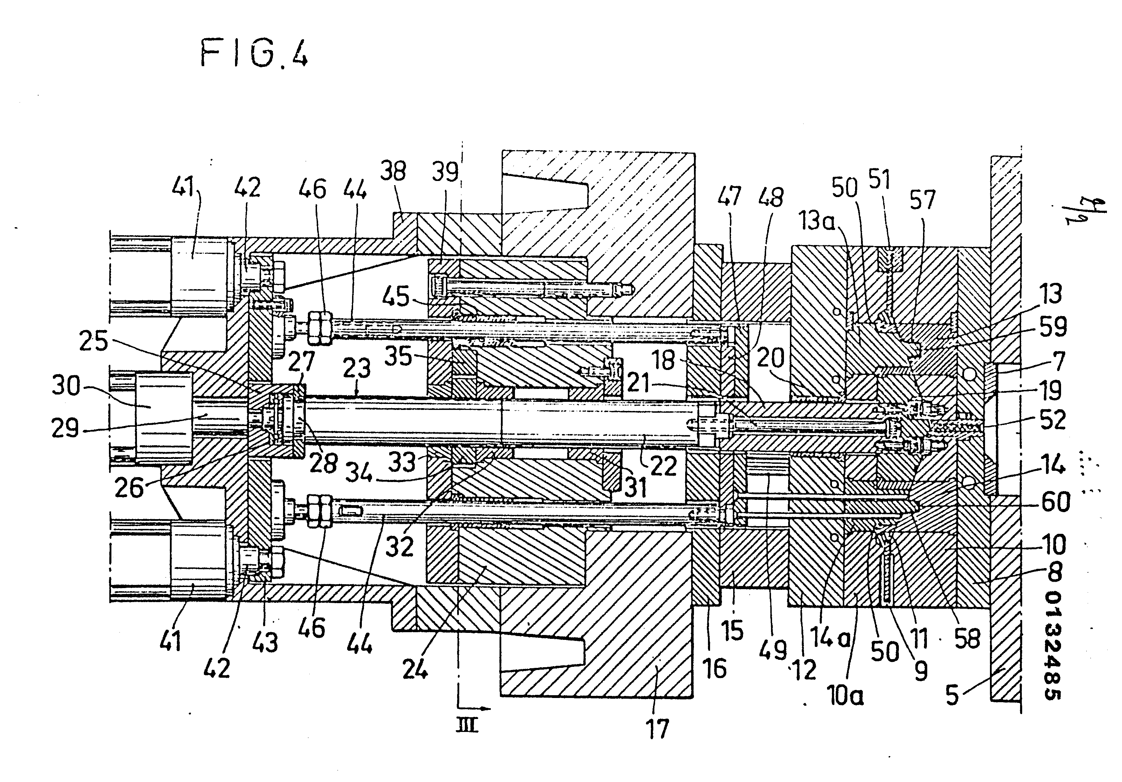

Further characteristic features and advantages of the method and the apparatus according to the invention will appear from the following description of an embodiment of the invention, reference being had at the same time to the appended diagrammatic drawings in which Fig. 1 is a perspective view of an element produced in an apparatus according to the invention and being under production in accordance with the method of the invention, Fig. 2 also is a perspective view of an element produced in accordance with the invention, Fig. 3 is a perspective view of an apparatus according to the invention, and Fig. 4 is a longitudinal section of part of the apparatus shown in Fig. 3.

Figs. 1 and 2 show an element 36 produced in the apparatus according to Figs. 3 and 4, the element according to Fig. 1 being intended for further treatment according to the invention, whereas the element according to Fig. 2 is a finished product. In the embodiment shown, the elements 36 consist cf a body or a shell 56 and a symbol 55 or the like. Fig. 2 shows a metal coating 61 or a covering of metal on the element 36, while reference numeral 62 denotes a portion of the element 36 which is not coated with metal.

According to the invention, there is first provided an element 36 in the form of a plastics detail or a set of details, each element 36 according to the embodiment comprising a body 56 and a symbol 55, signs, figures, digits or letters or the like. Use is made in this connection of an injection moulding machine capable of multicomponent moulding, which means an injection moulding of plastics material consisting of different materials. According to the invention, use is made of at least two different plastics materials, i.e. at least a first plastics material 1 and a second plastics material 2. The first plastics material 1 is a plastics material which, in the coating technique employed, attracts metal 61, while the second plastics material 2 is a metal-repelling plastics material.

With further reference to Fig. 3 and the injection moulding machine illustrated therein, this machine is especially designed for the moulding of such elements 36 or, in accordance with the embodiment chosen, press and control buttons or keys for, for example, the chassis of television receivers and radios or calculating machines which are to be provided with signs, symbols 55, figures, digits or the like and which stand out by having a different colour than the actual shell 56 or the coating 61, the shell 56 being formed from the said first plastics material 1 and the symbols 55 from the said second plastics material 2. To this end, the machine has been provided with a special tool or mould which will be described in more detail in connection with Fig. 4. Furthermore, the injection moulding machine comprises an injection moulding mechanism 53, an ejection mechanism 54, first and second injection units 3 and 4, respectively, said first injection unit 3 being intended for injection of the said first plastics material, while the said second injection unit 4 is intended for injection of the said second plastics material 2. The injection units 3, 4 are arranged at an angle of $90^{\circ}$ relative to one another. The requisite hydraulic and/or pneumatic and electric equipment of the injection moulding machine is not shown in the drawings. The injection units 3 and 4 and the said equipment are of known design and construction and will therefore not be described in more detail. A platen 5, see Fig. 4, is fixedly mounted on four rods 6 and provided with a centering plate 7 for the nozzle of the unit 4. Secured to the platen 5 is a bolster plate 8 for a three-part mould or tool generally designated 9 and comprising two mould blocks 10 and 10a, a movable mould part 11 and a backing plate 12. Cavity blocks 13, 14 and 13a, 14a, respectively, are provided in the mould blocks. The backing plate 12 is connected via a spacer means 15 with a bolster plate 16 which is located on the ejection side of the mould and is locked to an axially movable platen 17 of the machine. When the mould is opened by displacing the axially movable platen 17, the cavity blocks 13a and 14a secured to the mould block 10, and also the mould part 11, will be moved away from the stationary mould block 10. The mould part 11 is, in its turn, fixedly connected by means of screws 19 to a jointing or spacer shaft 18 which is mounted in a bush 20 provided in the backing plate 12 and is nonrotatably secured, by means of a screw 21, to a shaft 22 provided with guide grooves 23, teeth or the like and extending through the platen 17 and a housing 24 associated with said platen, all the way up to a sleeve 25. The sleeve 25 carries an end bearing 26 for the shaft 22 and is connected, by means of a screw or the like, to a piston rod 29 of a hydraulic transport cylinder 30. Secured to the sleeve is a locking ring 27 which, by cooperating with a groove 28 in the shaft 22, locks the shaft to the sleeve 25. The shaft 22 is mounted in three bushings 31, 32 and 33 in the housing 24 so that the shaft 22 can be rotated together with the jointing shaft 21 and axially displaced, when this is necessary. The shaft is displaced by means of the hydraulic cylinder 30, while the rotation of the shaft 22 is effected by means of a hydraulically operated indexing device for the mould part 11. The indexing device is disposed within the housing 24 and comprises a gear wheel 34 which is mounted on the grooved part of the shaft 22 and in relation to which the shaft can be displaced but not rotated. The gear wheel 34 is fixed in its position by the bushings 32, 33 which are provided in the cover plate 39. Cooperating with the gear wheel 34 is a rack 35 which is displaceably mounted in a groove in the housing 24. The rack 35 is operated for rotating the shaft 22 through a predetermined angle by means of a hydraulic cylinder 37 which is started by impulses from a limit switch on the transport cylinder 30 when the latter reaches a predetermined position. Also secured to the platen 17 is a yoke-like holder 38 surrounding the housing 24 with the cover plate 39 and carrying, in addition to the transport cylinder 30 together with a block 40 (see Fig. 3), two hydraulic ejector cylinders 41 mounted each on one side of the cylinder 30. The piston rods 42 of the ejector cylinders are connected with one another by means of a disc 43 to which are connected two longitudinally adjustable (at 46) ejector rods 44 extending through the housing 24 and the platen 17. The ejector rods 44 are guided by bushings 45 in the housing and are interconnected at their other ends by ejector platens 47, 48 which are connected to one another and to which ejector pins 49 are secured. According to the embodiment illustrated, the mould 9 is intended for moulding, for example, control buttons for a television receiver chassis and consists of the stationary mould block 10 in which the cavity blocks or female moulds 13 and 14 are provided, for instance ten on either side of the axis of symmetry of the mould, the mould block 10a which is connected to the plate 12 and in which the male moulds 13a and 14a are provided, and the mould part 11 which is secured to the jointing shaft 21 and which, when the mould is open, is rotatable relative to the mould blocks 10 and 10a, said mould part 11 being provided with sleeve-like inserts 50 for guiding the male moulds. Furthermore, the mould 9 is provided with two intakes 51 and 52, a first intake 51 for the first injection unit 3 and a second intake 52 for the second injection unit 4. As is usual, the mould block 10 and the mould part 11 are provided with grooves to form distribution passages from the said intakes 51 and 52, respectively, to mould cavities 57 and 58 formed by the female and male moulds. The said grooves are so arranged that the mould cavities 57, when the mould is closed, communicate only with the first intake 51 for the first injection unit 3, and the mould cavities 58 with the second intake 52 for the second injection unit 4. As will appear from Fig. 4, the mould cavities 57 in the right-hand mould half are smaller than the mould cavities 58 in the left-hand mould half, and this is due to the fact that the core part 59 of the male moulds 13a is smaller than the core part 60 of the male moulds 14a.

The mode of operation of the machine will now be described in more detail below, with reference to the production of elements 36 of plastics material and, in accordance with the embodiment shown, control buttons for, for example, the chassis of a television receiver. According to one embodiment, the buttons are to consist of a body 56 formed for subsequent metal coating and having portions which are not to be provided with the metal coating, to form, for example, symbols 55 in black colour. To this end, a compound for the first plastics material 1 which attracts metal, is injected by means of the first injection unit 3, and a compound for the second plastics material 2 which repels metal, is injected by means of the second injection unit 4. The two plastics materials 1 and 2 may have different colours, but according to the embodiment illustrated the second plastics material 2 is to consist of a black plastics material, for which reason a black plastics compound is injected. After locking of the mould 9, the nozzles of the units are inserted in the respective intakes 51 and 52, whereupon the compounds for both the first plastics material 1 and the second plastics material 2 are injected simultaneously. The compound for the first plastics material 1 enters the mould cavities 57, while the compound for the second plastics material 2 enters the mould cavities 58. After injection, after-packing is carried out in per se known manner to compensate for the shrinkage and homogenisation of the material. This is followed by cooling which is initiated by means of a timer, and during cooling of the mould new material is dosed into the injection units 3 and 4. After cooling, when the timer has stopped, the mould is opened by displacing the movable platen 17, whereby the mould part 11 and the mould block 10a with the male moulds 13a and 14a, together with the bolster plate 16 and the platen, move away from the stationary mould block 10 with the female moulds 13 and 14 which are provided with, respectively, raised symbols 55 and a planar bottom. After opening of the mould, the ejector mechanism is started for ejection of the finished element 36 which is located in the left-hand mould half. As has been mentioned before, the element may be a plastics detail or a set of details. After ejection of the finished element 36, the transport cylinder 30 is started by impulses from a limit switch on the ejector cylinders 41 to move the rotatable mould part 11 such that it goes entirely free from the cores 59 and 60 projecting from the male mould 13a and 14a, so that the mould part 11 can be rotated. After the transport cylinder 30 has pushed forward the mould part 11 a sufficient distance, the hydraulic cylinder 37 of the indexing device is started by an impulse from a limit switch of the transport cylinder 30 for displacing the rack 35 which thus rotates the shaft 22 and the mould part 11 through 180$^{\circ}$. After that, the transport cylinder 30 is again activated to pull back the mould part 11, and the semifinished article moulded in the right-hand mould half has now been moved to the left-hand mould half, and after closing of the mould a new working cycle can be initiated to supply compound for the said second plastics material to the transferred empty button set and to fill out the through-grooves, formed by the female moulds 13, in the body 56 with the said second plastics material 2.

The elements 36, the plastics details or the sets of details thus obtained are then subjected to metallization, for example by being immersed into a bath in which those portions of the elements 36 which have been formed from the said first plastics material 1 will be provided with a surface layer of metal 61, while the remaining portions of the elements 36 or the portions which have been formed from said second plastics material 2 will remain without metal coating; see reference numeral 62 in Fig. 2, for which reason the plastics material here will constitute the surface of the element 36.

It is also possible to produce elements 36 from three or more different plastics materials, depending upon the field of use of the elements or the product, or its contemplated use, for example with portions in different colours, also in combination with metallized and nonmetallized portions. Thus, two or more portions of the elements may be formed from plastics material which repels metal and from differently coloured plastics materials, or materials attracting metal.

The said second plastics material may be a transparent or translucent plastics material. For example, it is possible to produce "luminous" symbols 55 in the element 36 by providing on one side of the element a light source which is made to shine through the element or that portion of the element which has no metal coatings.

A test was conducted, utilizing an apparatus of the type described above for the production of keyboard keys. To this end, an ABS plastics was used for those portions of the product which should be metal-coated, and a PVC plastics for those portions of the product which should not be metal-coated or for which no metal coating was desired. The keys thus produced were then immersed into a bath to be subjected to electroplating. In this manner,

11

keys were obtained which had become partially metallized. It was found that those portions of the keys which consisted of PVC plastics, remained entirely without a metal coating.

Modifications of the above described method and apparatus would seem possible without departing from the inventive concept, and also modifications of the apparatus illustrated in the drawings would seem possible. Thus, the invention is not restricted to what has been shown and described, but merely by the appended claims.

12

CLAIMS

1. A method of producing elements of plastics material, said elements having both metallized and nonmetallized portions, the metallized portions being formed by coating, for example electroplating, immersion or some other per se known coating method, c h a r a c t e r - i z e d in that the element which is to be produced, is formed of at least a first plastics material and a second plastics material, the first plastics material being a plastics material which, during the said coating operation, attracts metal, while the second plastics material is a plastics material which repels metal, whereupon the element is subjected to metallization, for instance by immersion in a bath in which said first plastics material is provided with a surface layer of metal, while the said second plastics material remains without a metal coating.

2. A method as claimed in claim 1, said element being formed from three or more different plastics materials, c h a r a c t e r i z e d in that at least two of the said different plastics materials are plastics materials repelling metal.

3. A method as claimed in claim 1 or 2, c h a r - a c t e r i z e d in that two or more of the said plastics materials are differently coloured plastics materials.

4. A method as claimed in claim 1 or 2, c h a r - a c t e r i z e d in that the said second plastics material, or the said plastics materials repelling metal, are a transparent or translucent plastics material.

5. A method as claimed in claim 1 or 4, in which said elements are a plastics detail or a set of details and are intended to form, for example, keys carrying signs, symbols, figures and the like and intended for the keyboards of, for example, telephones, calculating machines etc., press or control buttons for the chassis of, for example, television receivers and radios etc., c h a r a c t e r i z e d in that those portions of the plastics details which are intended to stand out in the form of signs, symbols, figures and the like, are formed of metal-repelling plastics material, whereas at least the portions of the plastics details bordering upon the said portions are formed from metal-attracting plastics material.

6. A method as claimed in claim 1, c h a r a c - t e r i z e d in that the element is formed from two or more plastics materials attracting metal.

7. A method as claimed in any one of the preceding claims, c h a r a c t e r i z e d in that the said first plastics material is ABS plastics, while the said second plastics material is PVC plastics.

8. An apparatus for carrying the method as claimed in any one of claim 1, 4, 5 or 7 into effect, said apparatus being of the type which is arranged for injection moulding of elements by using a mould which is secured to the platen of the apparatus and which has a mould part movable in relation to the remaining mould parts of the mould, the mould being divided into mould cavity sections for the stepwise construction of an element, such as a plastics detail or a set of details, and intended to form, for example, keys with signs, symbols, figures and the like for the keyboards of, for example, telephones, calculating machines etc., press or control buttons for the chassis of, for example, television receivers and radios etc., said apparatus being provided with injection units, c h a r - a c t e r i z e d in that there is provided a first injection unit (3) for a first plastics material (1), the mould (9) having a first mould cavity section, and a second injection unit (4) for a second plastics material (2), the mould (9) having a second mould cavity section, and that the first plastics material (1) is intended to be injected into the first mould cavity section, while the second plastics material (2) is intended to be injected into the second mould cavity section, that the movable mould part (11) of the mould (9) is arranged displaceably and rotatably in relation to the remaining mould parts of the mould for moving, after each injection through the said first and second injection units (3, 4) and after ejection of a finished element (36) by means of, for example, an ejection mechanism (54), the element (36) which is being built up within the mould (9) to the next section of the mould.

FIG.1

FIG.2

FIG.3

# FIG.4

# EUROPEAN SEARCH REPORT

**European Patent Office**

**0132485**

Application number

EP 83 85 0198

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-1 254 308 (BAKELITE XYLONITE LTD.) * Page 1, lines 79-96; page 3, lines 7,24,25 * | 1-8 | C 23 C 3/00 B 29 F 1/12 |
| X | US-A-3 773 450 (SVANFORS) * Figures 1,2 * | 8 | |
| X | US-A-3 591 352 (KENNEDY) * Column 3, lines 3-14, 33, 40-41 * | 1-8 | |
| X | US-A-3 640 789 (HEFFER) * Column 2, lines 5,44 * | 1-7 | |
| X | DE-A-2 207 511 (PLATED PLASTIC DEVELOPMENTS LTD.) * Page 4, line 10; page 11, line 11 * | 1-7 | TECHNICAL FIELDS SEARCHED (Int. Cl. ³) C 23 C B 29 F |

The present search report has been drawn up for all claims

| Place of search | Date of completion of the search | Examiner |
|---|---|---|
| THE HAGUE | 04-04-1984 | NGUYEN THE NGHIEP |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82